Europäisches Patentamt

European Patent Office

Office européen des brevets

(11) Numéro de publication: 0 386 385
A1

## (12) DEMANDE DE BREVET EUROPEEN

(21) Numéro de dépôt: 89500028.9

(22) Date de dépôt: 09.03.89

(51) Int. Cl.5: **B01D 3/14, B01D 5/00,**
**C12F 1/00, C12F 3/10**

(43) Date de publication de la demande:
**12.09.90 Bulletin 90/37**

(84) Etats contractants désignés:
**ES FR GR IT**

(71) Demandeur: **Villanueva Gonzales, Juan José**
**208, Mies de Palacio**
**Sierrapando-Torrelavega Cantabria(ES)**

Demandeur: **Ballester Munoz, Francisco**
**39, La Mina**
**Puente Arce Cantabria(ES)**

(72) Inventeur: **Villanueva Gonzales, Juan José**
**208, Mies de Palacio**
**Sierrapando-Torrelavega Cantabria(ES)**
Inventeur: **Ballester Munoz, Francisco**
**39, La Mina**
**Puente Arce Cantabria(ES)**

(74) Mandataire: **Alonso Langle, Emilio Juan**
**c/o UDAPI, S.L. Segre, 18, Bajo**
**E-28002 Madrid(ES)**

(54) **Installation pour l'obtention des eaux-de vie et liqueurs.**

(57) L'installation comprend un alambic principale de distillation 1 chauffé par un échangeur de chaleur 2, et dont le cou 9 l'accouplant à la coupe de distillation correspondante 11 présente un double accoudément 10 où on se produit une precondensation des alcools qu'arrivent à un rectificateur 13 dont le fonctionnement est celui d'un petit alambic, où on réalise à nouveau le chauffage et la postérieure condensation par réfrigération de la partie supérieure. Les produits distillés arrivent, de ce rectificateur 13, à un purificateur 23, et de celui-ci, ils passent à un dépôt régulateur 32, et de celui-ci définitivement, à un dépôt de produits élaborés 36. L'installation se complète avec un dépot 37 en communication avec la coupe de distillation 11 pour faire que les produits obtenus absorbent les arômes transportés vers ce dépot-là 37.

EP 0 386 385 A1

## INSTALLATION POUR L'OBTENTION DES EAUX-DE-VIE ET LIQUEURS

PROPOS DE L'INVENTION

La présente invention est en rapport avec une série d'améliorations introduites dans les installations ayant pour but la distillation du marc pour l'obtention des eaux-de-vie et liqueurs, et dont les améliorations permettent que l'ensemble de l'installation offre une série de prestations fonctionnelles et d'efficacité en ce qui respecte une majeure qualité et homogénéité dans les produits obtenus.

ANTECEDENTS DE L'INVENTION

Les installations pour la distillation du marc se fondent dans la plupart des cas en les alambics classiques, qui sont des dépots auxquels le produit à distiller accède, étant chauffé à travers d'un foyer, alambic qui compte avec une cloche supérieure continuant en un cou, lequel aboutit à la coupe correspondante qui est où la vapeur du produit à distiller se condense, de manière que de cette coupe sortent les conductions correspondantes pour la distribution des divers components ou produits obtenus.

Un inconvénient dans ce type d'installations c'est la forme de chauffage du produit contenu dans l'alambic ou chaudière de distillation proprément dite, en prévoyant aussi comme inconvénient ce que dans ce type d'alambics, le vidage est par basculement, ce qui demande des moyens d'accouplément et désaccouplément entre l'alambic même et la coupe respective supérieure ou cou intermède.

DESCRIPTION DE L'INVENTION

L'installation que l'invention propose a été conçue pour résoudre tous ces problèmes à satisfaction pleine, et pour ceci, elle incorpore une série d'innovations et même des éléments nouveaux, qui ont pour objet l'obtention d'une majeure qualité et homogénéité dans la distillation, et en conséquence, sur les produits obtenus.

Dans ce but, le chauffage n'est plus produit directément avec un foyer, mais avec un échangeur de chaleur extérieur au corps de base de l'alambic ou chaudière de distillation, améliorant ainsi l'uniformité de la température dans l'intérieur du dit alambic.

La circulation de la phase liquide des produits à distiller est obtenue avec la collaboration d'une pompe extérieure.

Le vidage d'un alambic tel, ou chaudière de distillation, est fait, pas en forme basculante comme en d'autres systèmes d'installation, mais à travers d'un "sans-fin" prévu dans le fond dudit alambic.

En ce que regarde l'échangeur de chaleur, celui-ci présente une réserve de la phase liquide à distiller, avec le but de que la pompe ne travaille pas au vide quand les alcools s'évaporent dans la distillation.

Une autre innovation presentée par l'installation de l'invention c'est précisément dans le cou d'union de la cloche de l'alambic avec la respective coupe supé rieure, en prévoyant pour ceci que ledit cou offre deux inflexions de 90° à l'objet de qu'il se réalise grâce à cette configuration l'obtention d'une pré-condensation, en obténant des alcools secondaires et des matières lourdes qui peuvent être séparées grâce à cette disposition du double inflexion dans le cou, étant donné que ces produits n' atteignent pas la coupe supérieure, parce-que sa condensation, comme on vient d'expliquer, se réalise précisément dans cette zone de double inflexion du cou.

Une autre nouveauté dans l'installation de l'invention c'est l'incorporation d'un rectificateur où l'on envoye directément les produits cités auparavant en phase liquide; c'est-à-dire, que les produits obtenus comme conséquence de la double inflexion ou coude du cou supérieur sont séparés et envoyés vers cet élément nommé rectificatéur, dont le fonctionnément c'est comme un petit alambic où on réalise à nouveau le chauffage de ces produits et sa condensation postérieure par réfrigération de la partie supérieure.

Ce rectificateur-ci ramasse aussi les parties fines ou queues de chaque distillation avec le propos de récupérer les alcools correspondants.

Les produits distillés atteignent un nouveau élémen dénommé purificatéur de triple corps, où on produit une rapide décantation à cause des diverses densités de ces produits, en se déplaçant rapidément à sa partie inférieure d'où ils sont remués , et ce déplacément rapide est obtenu grâce à la forme triconique prévue dans l'intérieur du dit purificatéur.

Finalément, l'installation compte en plus avec un dépot à travers duquel on réalise l'incorporation des arômes aux produits. Dans ce dépot on peut brûler des substances arómatiques ou bien les faire bouillir à l'objet de les transporter à travers d'une conduction adéquate à un récipient situé dans la partie inférieure de sortie de la coupe de distillation où l'eau-de-vie peut absorber lesdits arômes.

## DESCRIPTION DES DESSINS

Pour compléter la description qu'on est en train de faire, et à l'objet d'aider à une meilleure compréhension des caractéristiques de l'invention, on accompagne à cette mémoire descriptive, comme partie intégrale de la même, une feuille unique de plans dans laquelle, avec un caractère illustratif et non limitatif, on a représenté une vue générale schématique de l'installation de distillation objet de l'invention, avec touts les éléments et innovations qu'elle incorpore.

## REALISATION PREFERENTE DE L'INVENTION

A la vue de ladite figure, on peut observer comment l'installation possède, en premier lieu, un alambic ou chaudière de distillation principale 1 à laquelle accèdent logiquément les produits à distiller, lesquels sont chauffés à travers d'un échangeur de chaleur 2, prévu à l'extérieur du corps de la chaudière ou alambic 1, avec la particularité qu'à travers du dit échangeur de chaleur 2 il se produit une circulation de la phase liquide des produits à distiller, à l'aide d'une pompe de circulation 3. L'échangeur compte logiquément avec son correspondant conduit d'entrée 4 et de sortie 5 d'eau chaude ou vapeur. On doit noter aussi que la chaudière ou alambic 1 compte avec un vis "sans-fin" pour le vider, qui est activé par le correspondant moteur 7.

Comme dans les cas conventionnels, l'alambic ou chaudière 1 se complète dans sa partie supérieure avec la cloche 8 correspondante à travers de laquelle il s'origine l'entrée des produits à distiller, cloche unie à un cou 9 avec un double accoudément 10 dont on expliquéra le fonctionnément un peu plus tard.

En révenant sur l'échangeur de chaleur 2, on doit faire noter le fait qu'à travers de celui-ci on obtient ou on améliore l'uniformité de la température dans l'intérieur de la chaudière 1, et il présente en plus une réserve de la phase liquide à distiller pour éviter que la pompe 3 travaille au vide alors que les alcools de la distillation commencent à s'évaporer.

En ce qui concerne le double accoudément 10 du cou 9, on obtient, grâce à cette configuration, une condensation dans cette zone, ce qui permet de rétirer les alcools secondaires et les matières lourdes qui, comme conséquence du dit double accoudément 10, n'atteignent pas la coupe respective 11. Lesdits produits sont rémués en phase liquide par la partie inférieure, concrétement à travers de la sortie 12 et ils sont envoyés directement au rectificatéur 13.

Pour rendre la precondensation encore plus facile dans la partie supérieure du cou, c'est-à-dire, dans le double accoudément 10, on a prévu une chambre 14 à travers de laquelle il circule de l'eau froide, ce qui permet une meilleure condensation des alcools supérieurs plus denses et non aptes pour l'usage dénommé "de bouche". L'entrée de cette eau froide à la chambre 14 est réalisé à travers du conduit 15.

Comme on a expliqué avant, ces alcools et matières lourdes passent à travers de la sortie 12 au rectificatéur 13, et celui-ci a des plaques perforées 16 disposées selon des plans horizontaux.

Ce rectificatéur 13 offre un fonctionnément similaire à celui d'un petit alambic où on réalise à nouveau son chauffage et postérieure condensation par refrigération de la partie supérieure.

Or, dans la partie supérieure il incorpore une coupe de condensation 17, laquelle on peut démonter et elle est assujétie avec un élément 18 ou vis, ayant dans cette partie supérieure un récipient d'eau 19 pour la condensation, dépôt 19 qui compte avec une entrée d'eau de réfrigération 20, et aussi avec la correspondante sortie 21.

La condensation produite comme conséquence de la coupe 17 c'est celle qui correspond à l'eau-de-vie rectifié qui sort à travers du conduit 22 vers le purificateur 23.

Le rectificatéur cité a, dans sa partie inférieure, un échangeur de chaleur 14, ainsi que la correspondante sortie 25 pour les détritus , et une entrée 26 de vapeur ou d'eau chaude pour chauffer ce rectificateur 13.

Les détritus qui procédent du tuyeau 25, qui logiquément viennent du rectificatéur 13 comme on vient de dire, ont accès au tuyeau générale de détritus 28, qui sont envoyés vers un dépot de ramassage 29.

De sa part, les produit distillés, c'est-à-dire, l'eau-de-vie qui sort par le conduit 22, passé par le judas 30 et atteint le purificatéur 23, dans ce appareil il se produit une décantation à cause des diverses densités des substances plus denses, lesquelles se déplacent rapidément à sa partie inférieure de sorte qu'à travers du tuyeau 31 elles arrivent au tuyeau de détritus 28 et après au dépot 29.

De ce purificatéur, les produits distillés vont à un dépot régulateur 32, d'où les détritus sont envoyés à travers du conduit 33 au tuyeau générale 28 jusqu'au dépot 29, alors que les produits obtenus passent au conduit 34, d'où ils vont jusqu'au tuyeau générale 35, à travers duquel ils sont déplacés au dépot 36 récepteur des dits produits élaborés.

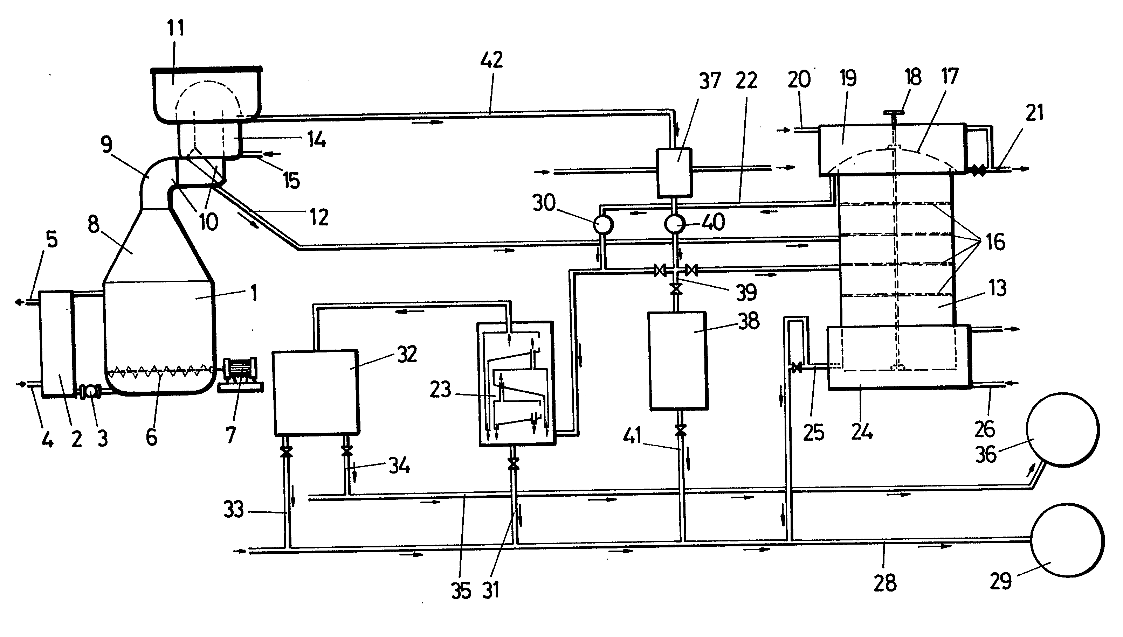

L'ensemble de l'installation se complète en plus avec des moyens où l'on peut brûler des substances arômatiques ou bien les faire bouillir, lesquelles sont transportées à travers d'un conduit vers un dépot 37 situé dans la partie inférieure de sortie de la coupe 11, où l'eau-de-vie peut absorber lesdits arômes. On peut observer dans la figure de référence le dépot 37 en communication avec un dépot méthylique 38, avec l'intercalation de la conduction 39 et un judas de verre 40, et cette conduction intermède communique, d'une part, avec le rectificateur 13, d'autre avec le purificateur 23 et avec le dépot de méthylique même 38, dont la sortie se communique, à travers du conduit 41 avec le conduit des détritus 28 même.

Comme on a dit avant, et comme on voit aussi dans la figure, la sortie ou conduit 42 c'est celle qui porte l'eau-de-vie de la distillation produite dans la coupe 11 au dépot cité 37 des arômes.

Il faut dire finalément que le purificateur 23 a un corps triple et grâce à la forme triconique de son intérieur, il se produit une rapide décantation à cause des diverses densités des substances plus denses, lesquelles, comme on a dit avant, accèdent à travers du conduit 31 au tuyau générale 28 des détritus.

Nous ne considérons pas nécessaire de rendre cette description plus extense étant donné qu'un expert quelconque dans cette matière comprendra l'atteinte de l'invention et les avantages dérivées d'elle.

Les matériaux, la forme, le volume et la disposition des éléments pourront être variés en tant ceci n'altère pas l'essentialité de l'invention.

Les termes usés pour décrire l'invention doivent être toujours pris en sens ample et non limitatif.

## Revendications

1ère.- Installation pour l'obtention d'eaux-de-vie et liqueurs, qu'étant prévue pour obténir la distillation du marc et ainsi obtenir de l'eau-de-vie, de manière préférente, et en se basant principalément en un alambic ou chaudière principale de distillation 1 contenant le produit à distiller, lequel est chauffé pour l'obtention de cette distillation, et dérivant de cette chaudière 1 pour sa partie supérieure une cloche 8 ainsi qu'un cou 9 finissant en une coupe de distillation supérieure 11, caractérisée essentiellement parce-qu'on a prévu dans la partie extérieure de ladite chaudière ou alambic de distillation 1 un échangeur de chaleur 2 lequel, avec de la vapeur ou de l'eau chaude et à travers d'une pompe 3 recycle l'eau du respectif chauffage, ayant été prévu que le cou 9 qui communique la cloche 8 avec la coupe de distillation supérieure 11 présente un double accoudément 10 pour obtenir une precondensation d'alcools secondaires et des matières lourdes, lesquels sont envoyées à travers d'un conduit 12 vers un rectificateur 13 dans lequel on obtient par condensation, comme si d'un alambic normal il s'agissait, tout ceci de sorte que les produits distillés sont envoyés à travers du tuyau 22 vers un purificateur 23, ce qui produit une rapide decantation des substances les plus denses.

2ème.- Installation pour l'obtention des eaux-de-vie et liqueurs, selon la revendication 1ère, caractérisée parce-qu'entre la zone inférieure du double accoudément 10 et le rectificateur même 13 on a disposé un conduit 12 à travers duquel les produits condensés accèdent vers le rectificateur cité 13, comptant celui-ci dans sa partie supérieure avec une coupe de condensation 17 et dans la partie extérieure à la même, un réci pient d'eau pour la condensation, récipient où il entre l'eau de la réfrigération à travers du conduit 20, et elle sort par le conduit 21, avec la particularité que sous ladite coupe 17 on a prévu un conduit de sortie 22 de l'eau-de-vie rectifiée qui est envoyée à travers du conduit 22 vers le purificateur même 23; avec la particularité en plus que ledit rectificateur 16 compte dans sa partie inférieure avec un échangeur de chaleur 24 avec le conduit 26 d'entrée de vapeur ou d'eau chaude.

3ème.- Installation pour l'obtention des eaux-de-vie et liqueurs, selon la revendication 2ème, caractérisée parce-que le rectificateur 13 présente dans sa partie inférieure un tuyau de sortie 25 à traves duquel il se communique avec un tuyau générale de détritus 28, de sorte qu'ils puissent aller vers un dépot 29 pour les ramasser.

4ème.- Installation pour l'obtention des eaux-de-vie et liqueurs, selon revendication 1ère, caractérisée parce-qu'autour de la partie supérieure du cou 9 et sous la coupe de distillation méme 11, on a prévu une chambre ou dépot 14 d'eau froide pour collaborer à la condensation produite à l'intérieur de ladite coupe 11, chambre ou dépot 14 auquel l'eau froide accède à travers du conduit d'entrée 15.

5ème.- Installation pour l'obtention d'eaux-de-vie et liqueurs, selon les revendications précédentes, caracterisée parce-que les produits distillés qui atteignent le purificateur sont en part envoyés vers un dépot régulateur 32, alors que les substances les plus denses sont décantées dans ledit purificateur 23 et elles sortent à travers du conduit 31 pour atteindre le conduit générale d'élimination des détritus 28.

6ème.- Installation pour l'obtention d'eaux-de-vie et liqueurs, selon la revendication antérieure, caractérisée parce-que le produit ou produits distillés qu'arrivent au dépot regulateur 32 sont envoyés à travers du conduit 34 vers un tuyau générale 35 qui les transporte vers un dépot 36 de produits élaborés, alors que les détritus originés dans ce dépot regulateur, arrivent au tuyau générale d'élimination 28 à travers du conduit 33.

7ème.- Installation pour l'obtention d'eaux-de-vie et liqueurs, selon les revendications précédentes, caractérisée parce-qu'on a prévu un dépot 37 vers lequel on transporte des substances arômatiques obtenues par brûlure ou par ébullition, dépot 37 qui communique avec le fond de la coupe de distillation 13 à travers du conduit 43, à l'objet de faire absorber lesdits arômes à l'eau-de-vie ou produit obtenu dans cette coupe-là.

EP 0 386 385 A1

Office européen
des brevets

# RAPPORT DE RECHERCHE EUROPEENNE

Numero de la demande

EP 89 50 0028

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A- 906 651 (R. GAZAGNE) <br> * En entier * <br> --- | 1,2 | B 01 D 3/14 <br> B 01 D 5/00 <br> C 12 F 1/00 <br> C 12 F 3/10 |
| A | FR-A-2 236 939 (E.P. ORTHES) <br> * En entier * <br> --- | 1 | |
| A | DE-C- 470 584 (GEORG FRITZ) <br> * En entier * <br> --- | 1 | |
| A | FR-A-2 345 794 (KRAFTWERK UNION AG) <br> * Page 2, lignes 34-39; figure * <br> --- | 1 | |
| A | DE-C- 84 625 (C. DICKER) <br> * En entier * <br> ----- | 3 | |

DOMAINES TECHNIQUES RECHERCHES (Int. Cl.5)

B 01 D
C 12 F
C 12 G

Le présent rapport a été établi pour toutes les revendications

| Lieu de la recherche | Date d'achèvement de la recherche | Examinateur |
|---|---|---|
| LA HAYE | 07-11-1989 | VAN BELLEGHEM W.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)